# EUROPEAN PATENT APPLICATION

(11) **EP 4 250 220 A2**
(43) Date of publication of application: **27.09.2023**
(21) Application number: 20186906.2
(22) Date of filing: 28.11.2012
(51) Int. Cl.: G06Q 40/02

(54) **CONFIGURABLE BILLING WITH SUBSCRIPTIONS HAVING CONDITIONAL COMPONENTS**

(30) Priority: 29.11.2011 US 201161564777 P
(62) Divisional of application: 12852816.3
(71) Applicant: Zuora, Inc., Redwood City, CA 94065 (US)
(72) Inventor: ZOU, Cheng, Cupertino, California 95014 (US); VISWANATHAN, Param, San Jose, California 95148 (US)
(74) Representative: Patel, Nikesh

(57) **Abstract**

A method of billing charges incurred by a customer having a subscription account maintained by subscription billing management system. The subscription account specifies at least one subscription to be charged according to a defined rate plan and the rate plan includes charge objects having attributes such as a charge type, a trigger condition, a unit of measurement, and a cost per unit of measurement. The method includes defining a charge segment associated with a charge object, the charge segment being a time-based application of the charge object, and includes attributes such as its associated charge object and the charge object's attributes, an effective start time, a quantity of units, and a cost. The customers use of the subscription is monitored and charge events in are generated according to the defined charge objects and segments.

## Description

### CROSS-REFERENCES TO RELATED APPLICATIONS

This application claims the benefit of U.S. Provisional Application No. 61/564,777 entitled "Configurable Billing With Subscriptions Having Conditional Components" filed on November 29, 2011 (Attorney Docket No. 126681.0003), the entire disclosure of which, including Appendices A-F, is hereby incorporated herein by reference.

### Background

Many of today's products and services are implemented with an array of components, support services, utilities and computing resources, and each of components has associated costs, including financial costs. As a convenience to their customers, vendors typically attempt to provide a wide variety of pricing options for their products and services, while also simplify pricing for products and services into a single payment or a simple recurring payment. However, the complex, changing nature of the modern business environment can stress such attempts at pricing simplification. For example, different customer usage patterns can mean a flat fee is too high or too low for particular customers.

As pricing becomes more complex, new problems arise including problems associated with resource utilization accounting, pricing configuration, account management and account status presentation. Conventional attempts to address such problems are flawed. For example, some conventional systems are inefficient and/or ineffective. Some conventional systems are insufficiently flexible. Some conventional systems are difficult to configure and/or administer. Some conventional systems fail to clearly communicate account status to customers; for example, such systems may generate account statements that result in a relatively high number of customer queries with respect to amounts owed and/or that are not in accordance with customer expectations.

Embodiments of the invention are directed toward solving these and other problems individually and collectively.

### SUMMARY

The terms "invention," "the invention," "this invention" and "the present invention" used in this patent are intended to refer broadly to all of the subject matter of this patent and the patent claims below. Statements containing these terms should be understood not to limit the subject matter described herein or to limit the meaning or scope of the patent claims below. Embodiments of the invention covered by this patent are defined by the claims below, not this summary. This summary is a high-level overview of various aspects of the invention and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings and each claim.

Embodiments of the invention are directed to a configurable subscription billing management system ("SBMS") having conditional components, and its associated methods. The associated methods include a method of billing charges incurred by a customer having a subscription account maintained by a subscription billing management system. The subscription account specifies at least one subscription to be charged according to a defined rate plan and the rate plan includes charge objects having attributes such as a charge type, a trigger condition, a unit of measurement, and a cost per unit of measurement. The method includes defining a charge segment associated with a charge object, the charge segment being an expression of at least one time-dependent attribute of a charge object to a particular temporal duration of the subscription (e.g. a billing period, or fractional part of a billing period), and includes attributes such as its associated charge object and the charge object's attributes, an effective start time, a quantity of units, and a cost. The customers use of the subscription based product or service is monitored and charge events in are generated according to the defined charge objects and segments.

Other objects and advantages of the present invention will be apparent to one of ordinary skill in the art upon review of the detailed description of the present invention and the included figures.

### BRIEF DESCRIPTION OF THE DRAWINGS

Various embodiments in accordance with the present disclosure will be described with reference to the drawings, in which:
Figure 1 is a schematic diagram depicting aspects of an example computing environment in accordance with at least one embodiment of the present subscription billing management system (SBMS);
Figure 2 is a schematic, stack model diagram depicting aspects of an example billing service in accordance with at least one embodiment of the present SBMS;
Figure 3 is a schematic diagram depicting aspects of a subscription billing management model in accordance with at least one embodiment of the present SBMS;
Figure 4 is a schematic diagram depicting at least some aspects of the functionality of a billing engine in conjunction with the subscription billing management model depicted in Figure 3, in accordance with at least one embodiment of the present SBMS;
Figure 5 is a flow chart depicting at least some aspects of the functionality depicted in Figure 4;
Figure 6 is a flow chart depicting at least some aspects of the functionality of the present SBMS; and
Figure 7 is a schematic diagram depicting aspects of a non-limiting, exemplary computing architecture suitable for implementing at least some embodiments of the present invention.

### DETAILED DESCRIPTION

Various exemplary embodiments of the present subscription billing management system (SBMS) are described herein with the specificity necessary to meet statutory requirements. However, this description is intended only to aid a person having ordinary skill in the relevant art in appreciating and understanding the subject matter defined by the claims which follow. Specifically, such a person will understand and appreciate the subject matter defined by the claims to be inclusive of broader, narrower, alternative and/or additional embodiments, which may, for example, include different and/or additional elements or steps than those included in the described exemplary embodiments. Such a person will further understand that the scope of the claims includes any embodiment of the claimed subject matter implemented by, or used in conjunction with, technologies other than those explicitly described herein, whether existing at the time of invention or later developed. This description should not be interpreted as implying any particular priority, order, or arrangement among or between various elements or steps of the described embodiments, except when such priority, order or arrangement is explicitly defined by the claims.

Various aspects of at least one exemplary embodiment of the present SBMS are described below. The present SBMS is generally directed at addressing problems associated with resource utilization accounting, pricing configuration, account management and account status presentation created by complex pricing models, particularly those associated with subscription billing.

Embodiments of the present SBMS may address the aforementioned problems by providing an efficient, effective and flexible system and method of cost accounting and billing. A merchant user of such an embodiment may specify products and/or services (collectively referenced herein as "products"), for example, with a web-based user interface, and associated with charges including one-time charges, recurring charges and usage-based charges. In accordance with at least one embodiment of the SBMS, such specification is flexible enough to support a wide variety of product subscription options including time-based products such as telecommunication system use, provision of and access to remote computing resources, and content delivery products having charge amounts determined based on one or more characteristics of the content and/or timing of delivery (e.g., charge upon release, charge after an elapsed interval of time). Customer accounts may be maintained and associated with subscriptions referencing one or more products and services. Subscriptions may be amended over time, and a history of such amendments may be maintained. Charge segments, corresponding to charges incurred by customer accounts and aligned to suitable time intervals such as time intervals associated with time boundaries (e.g., beginnings and endings of days, weeks, months, quarters, calendar years, financial years), may be generated in accordance with subscriptions. Charge events may be generated in accordance with charge segments and formatted for presentation to customers.

Aspects of at least one exemplary embodiment of the inventive SBMS contribute to an ability to support a wide variety of product subscription options by providing (1) flexibility in specifying charges, (2) the ability to collect charges together as rate plans, and (3) generating charge events based on charge segments and charge objects. Examples of such flexible charge specification include charges specified in accordance with a commit charge model and charges specified in accordance with a discount model. Additionally, a combination of a discount and commit charge model can be specified.

At least some embodiments of the present SBMS may be used to model "pre-paid" products or services according to a commit and/or discount charge model. For example, a merchant may offer products according to subscription based charges as well as offer pre-paid products, e.g. a mobile phone service provider may offer phone service based on monthly subscriptions or based on a user's advance purchase of "minutes" of usage of on the provider's network. For some accounting and/or reporting purposes, such a merchant may wish to be able to model the "prepaid" product sales in the same manner as its subscription based charges, for example in order to aggregate total sales or make direct income comparisons.

With respect to charges specified in accordance with a commit charge model, for example, charges may be associated with a committed amount of resources made available by the merchant for potential use by the customer per amount of time (e.g., 1200 units per year, 100 units per month, etc.). Resource utilization may be received and/or measured at regular intervals, or billing periods, e.g. monthly. If aggregate usage exceeds the committed amount for a given period, an overage charge event may be generated. An optional smoothing may be applied with respect to aggregate usage determination. For example, aggregate resource utilization may be determined with respect to a "rolling window" of time with respect to a current measurement and/or billing period. For example, a subscription account's base pricing may be based on the usage of a particular number of units committed per month, while the same account may generate overage charges based on the subscriber's aggregate usage of units exceeding a predetermined limit over a preceding interval, e.g. 7 days or 28 days, regardless of whether the interval substantially corresponds to a billing period. Overage charge events may be applied at a configurable time with respect to factors such as the actual occurrence of the overage and/or a current measurement and/or billing period.

Types of discount charge models that may be utilized with at least one embodiment of the invention include "fixed amount" discount models and "percentage" discount models. Discounts may be applied at product, subscription and/or account levels. Discounts may be one-time, recurring and/or apply for a limited period of time. Discounts may be reversible, for example, application of a discount may be conditioned upon satisfaction of the terms specified by a contract. Discounts may be configured to apply only to "positive" statements and/or account balances. Alternatively, or in addition, "negative" account balances may be "rolled over" between statement periods. Discounts may be conditionally applied to all charges or to charges of a particular type. Taxes may be determined at a specified time with respect to the application of a discount (e.g., after the application of the discount). A determined discount amount may be capped with respect to various time intervals (e.g., statement period), and discounts may be conditional on the presence or absence of overage charges.

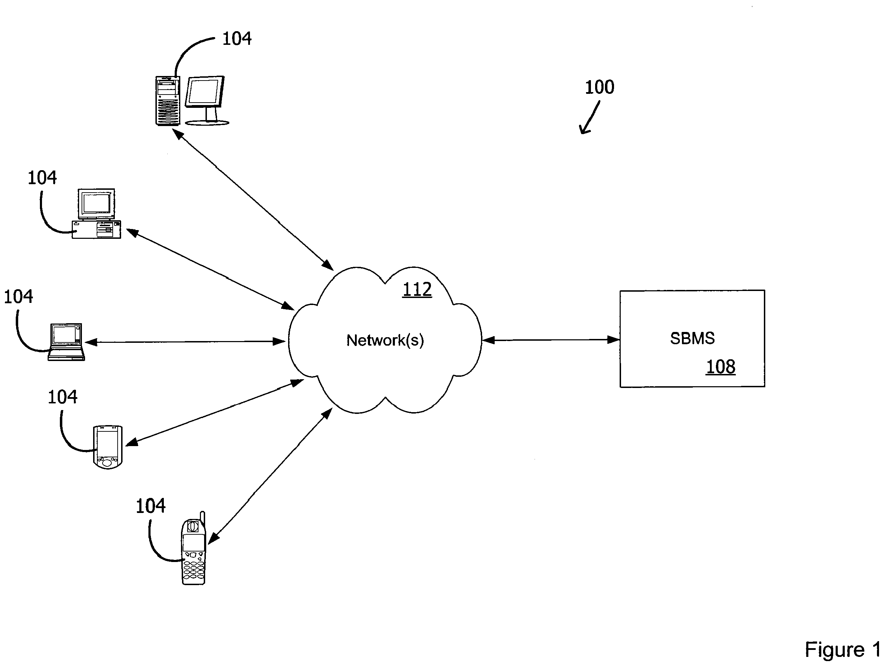

Figure 1 depicts aspects of an example computing environment 100 in accordance with at least one embodiment of the invention. A variety of clients (not shown) incorporating and/or incorporated into a variety of computing devices 104 may communicate with a billing service 108 through one or more networks 112. For example, a client may incorporate and/or be incorporated into a client application implemented at least in part by one or more of the computing devices. Examples of suitable computing devices 104 include personal computers, server computers, desktop computers, laptop computers, notebook computers, personal digital assistants (PDAs), smart phones, cell phones, computers, tablets and consumer electronics incorporating one or more computing device components such as one or more processors. Examples of suitable networks 112 include networks including wired and wireless communication technologies and networks operating in accordance with any suitable networking and/or communication protocol.

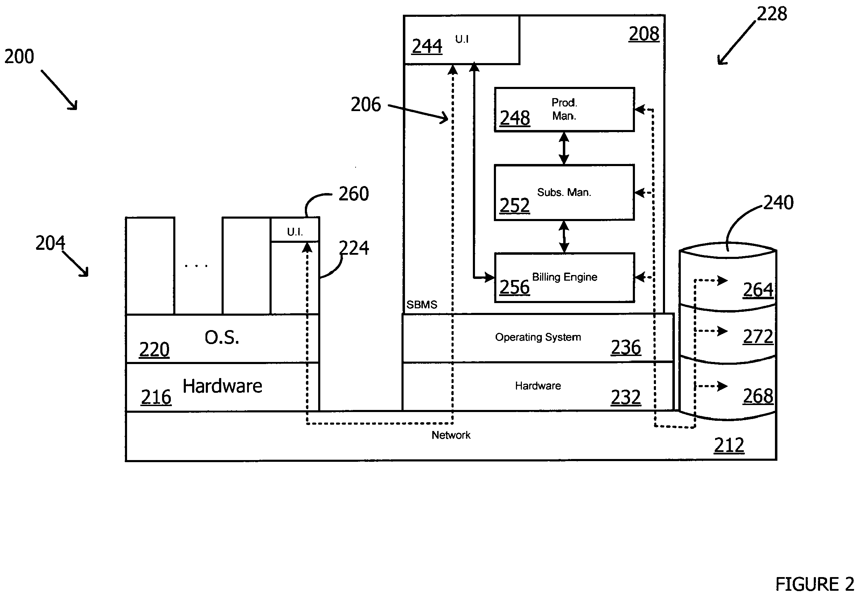

Figure 2 depicts a conceptual "stack" model 200 of an exemplary embodiment of the present subscription billing management system (SBMS) hosted on an exemplary computing environment, as shown in Figure 1. An exemplary computing device 204 is in data communication 206 with the billing service 208 over a network 212. The computing device 204 may include hardware 216, an operating system 220, and a client application 224. The billing service 208 may also be hosted on at least one computing device 228, such as a server, that may include hardware 232 and an operating system 236. Data related to the billing system may be stored in at least one database 240, which may be hosted on a separate computing device (not shown) from the billing service 208. The billing service 208 may include one or more user interfaces 244, including one or more programmatic interfaces and/or one or more graphical user interfaces (GUIs), configured at least to enable access to functionality of the billing service 208. The billing service 208 may include a product manager component 248 configured at least to enable establishment and maintenance of product and service specifications including associated rate plans and charges. The billing service 208 may include a subscription manager component 252 configured at least to enable establishment and maintenance of customer accounts and associated product subscriptions. The billing service may further include a billing engine component 256 configured at least to periodically generate charge events in accordance with active subscriptions. The billing engine may be further configured to generate account statements for delivery to subscription customers based at least in part on the generated charge events. Such account statements may be presented to subscription customers and accessible to subscription merchant employees in a variety of formats, including a printed format and an electronic format, for example, through a graphical user interface 244 of the billing service or a user interface 260 of the client application 224. The database 240 may be divided between data related to product catalogs 264, customer accounts 268, including customer account statements, and customer subscriptions 272.

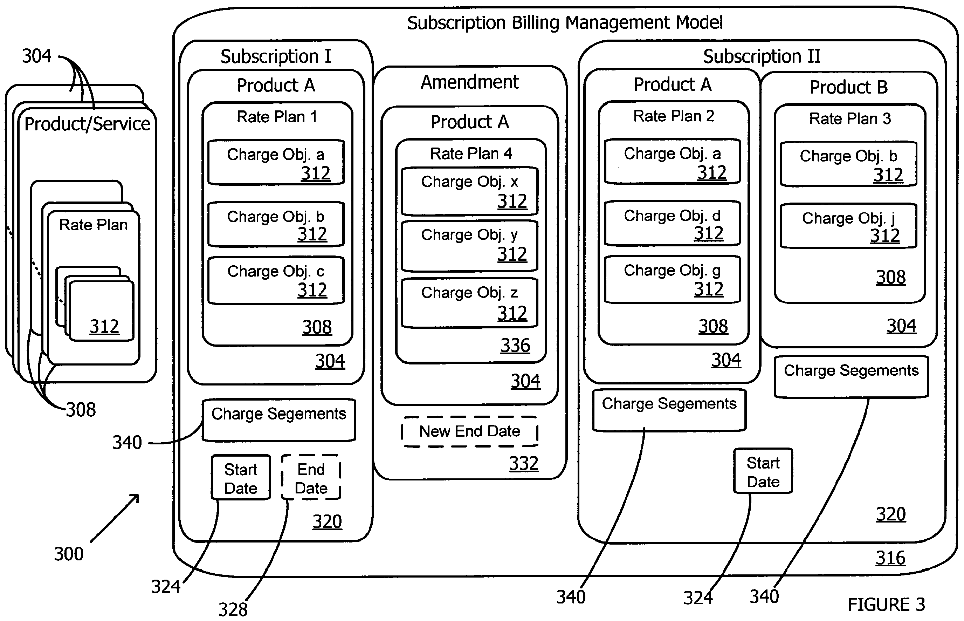

Figure 3 depicts aspects of an exemplary subscription billing management model 300 used to manage subscription billing data in accordance with at least one embodiment of the SBMS. Each offered product (or service) 304 may be associated with one or more rate plans 308. A rate plan may include one or more types of associated charge objects 312, including one-time charges, recurring charges, usage charges, overage charges and discounts, among other exemplary charge objects. A subscription customer account 316 may be associated with one or more subscriptions 320. A subscription 320 may define one or more of the specified products 304 and an associated rate plan 308 for each of the products 304. Subscriptions may have a start date 324 and an end date 328. (Note that in at least one embodiment, a subscription need not have an end date.) Amendments 332 may modify an existing subscription 320, for example, to update the end date 328, to modify the set of associated products (not shown), and/or to modify the selected rate plans 336 associated with the set of associated products. Subscriptions 320 may be associated with a set of contract terms and conditions, and subscription amendments 332 may correspond to contract amendments. Charge objects 312 may trigger the generation of charges upon the occurrence of an event, such as a contract becoming effective and a product or service becoming active, an overage being detected, a billing period ending (or beginning), or a discount becoming effective (or expiring).

Charge objects 312 may have attributes including charge identifier (e.g., a unique identifier with respect to charge objects), charge name, charge description (e.g., a human-readable description), a charge type (e.g., one-time, recurring, usage-based, discount, etc.), a trigger condition or conditions, units of measurement, object creation date, "created by" identifier (e.g., referencing an authorized user of the billing service), last modified timestamp (e.g., time and/or date), and "modified by" identifier. However, charge objects 312 are preferably not associated with a particular date or dates.

Rather, a charge object 312 may be used in conjunction with other characteristics of a given subscription to derive charge segments 340 for that subscription, with the charge segments corresponding to sub-elements of a charge object that may track changes to a charge object 312 (and hence to the charge or charges levied) over each of a series of time intervals. For example, multiple charge segments 340 may be created with respect to a single recurring charge object 312, for example, in response to a price and/or quantity change in an associated charge object at a certain time or during a certain time interval, such as the expiration of a discount, modeled on an "introductory period" for a subscription. As used herein, unless clearly contradicted by context, the terms "charge," "charge object," and "charge segment" refer to data objects that provide information for generating "charge events." Further, in some embodiments, a set or sequence of such charge events may be used to determine the charges to be applied to a customer account, and as the basis for generating an invoice or bill.

Charge segments 340 may have attributes including charge segment identifier (e.g., a unique identifier with respect to charge segments), a reference to a generating charge object (and/or a copy of some or all of the generating charge attributes), a quantity of units associated with the charge segment, a cost (e.g., a dollar amount) associated with the charge segment, effective start and end dates and/or times, "processed through" and "charged through" dates and/or times, and indicators as to a charge segment's place in a series of charge segments (e.g., segment number, last segment indicator). As is described below, for each charge segment 340, the billing engine may generate one or more charge events that are applied to an account and/or appear on an invoice. Thus, unlike charge objects 312, charge segments 340 may be associated with time intervals, for example based on the subscription start date, subscription end date, a subscription billing period, a period in which a discount or other form of incentive applies, etc. The combination of a subscription's selected product, rate plan, charge model, charge objects, etc. and derived charge segments, collectively form a charge specification for the subscription.

Customer accounts may have hierarchical structure. For example, some accounts may be "parent" accounts with respect to "child" accounts. Subscriptions may be associated with parent accounts and/or child accounts. Account statements and/or invoices may be generated with respect to parent accounts and/or child accounts. Service and/or resource utilization may be associated with child accounts and reported (including aggregated and/or summarized) at a parent account level.

In accordance with at least one embodiment of the SBMS, conceptual separation of date-associated charge segments 340 from specified charge objects 312 associated with subscriptions contributes to billing service flexibility. While previous attempts at providing a subscription based management service required a merchant to explicitly define how and when various charges should be incurred resulting in relatively complicated and non-fungible subscription definitions; however in the case of the present SBMS, because the charge objects can be general defined without being associated with specific dates or time periods, the SBMS allows a merchant to use, and reuse, a relatively limited set of charge objects to customize its subscription charging options to meet particular merchant and/or customer needs.

For each subscription, the billing engine of the SBMS may generate charge events in accordance with charge objects and charge segments associated with subscriptions. The billing engine may appropriately pro-rate charges when generating charge events based on associated charge segment information in the context of a service, statement and/or billing period (collectively "billing period"). As part of processing recurring charges, the billing engine may maintain independent "processed through" and "charged through" dates and/or times associated with charge events. Recurring charges may be applied in advance so that, in accordance with at least one embodiment of the invention, there is a need to keep track of starting points and ending points associated with billing engine processing of recurring charges. For example, suppose that a charge event associated with a monthly recurring charge is generated for the period 3/1/2011 through 3/31/2011. Then the "processed through" date for the recurring charge may be set to 3/1/2011 and the "charged through" date may be set to 3/31/2011. When a corresponding charge event for the month of April is generated, the "processed through" and "charged through" dates may be advanced to 4/1/2011 and 4/30/2011, respectively. As will be apparent to one of skill in the art, the differing "charged through" date can have consequences for determining and/or forecasting revenue and other financial statistics and/or metrics.

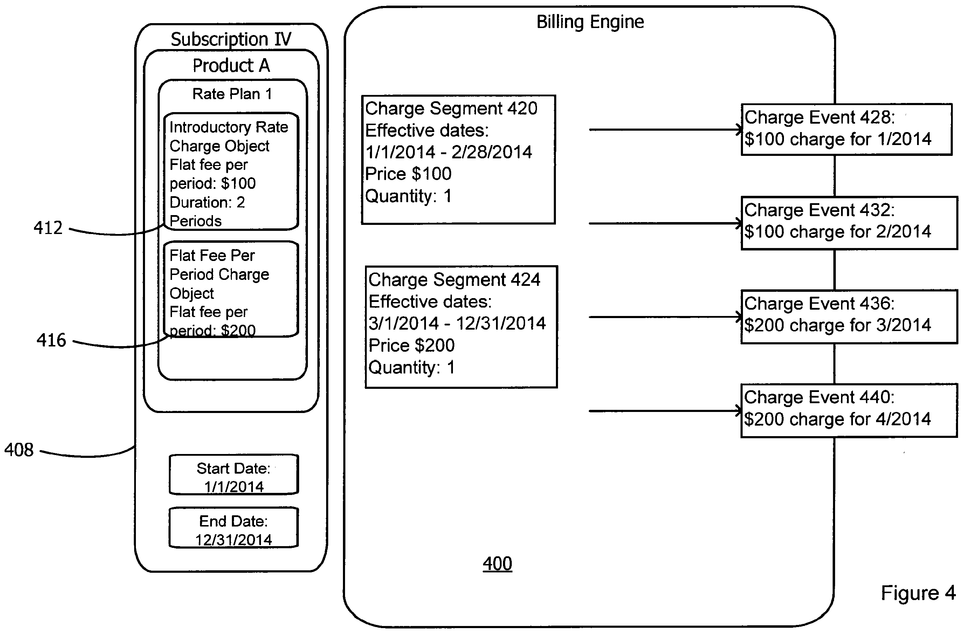

Referring to Figure 4 by way of example, exemplary embodiments of the SBMS may include components, such as a billing engine 400, similar to the billing agent depicted in Figure 2, which may generate charge events in accordance with the subscription billing management model shown in Figure 3. Suppose that a one year subscription 408 begins on January 1, 2014 and is billed at a flat-fee per month and provides for an introductory rate of $100 per month for the first two months, then increases to the standard monthly rate of $200 per month for the remainder of the of the subscription. The subscription model may include an introductory rate charge object 412 and a flat fee per period charge object 416. The billing engine will derive two charge segments based on the subscription's charge objects and effective dates:
(1) Charge Segment 420 with attributes: effective from 1/1/2011 to 2/28/2011, price $100, quantity 1; and
(2) Charge Segment 424 with attributes: effective from 3/1/2011 to 12/31/2011, price $200, quantity 1.
When the billing engine processes the subscription with a bill through date of 4/30/2011, it produces the following charge events based on the charge segment data and the billing period of 1 month:
(1) Charge Event 428 with attributes: fee for 1/1/2011 to 1/31/2011, $100 x 1 = $100;
(2) Charge Event 432 with attributes: fee for 2/1/2011 to 2/28/2011, $100 x 1 = $100.
(3) Charge Event 436 with attributes: fee for 3/1/2011 to 3/31/2011, $200 x 1 = $200; and
(4) Charge Event 440 with attributes: fee for 4/1/2011 to 4/30/2011, $200 x 1 = $200. Eventually, the billing engine may produce 10 charge events of $200 associated with Charge Segment 424, one for each of the ten non-discounted months, March through December, in the 12 month subscription.

For a subscription, the billing engine generates charge events base on the subscription's charge specification(s). In one example, a charge specification defines a charge object in accordance with a commit charge model, or a combination of a commit and discount charge model... Units of measurement (UOM) may be specified, as well as the number of units that are "included" with a base charge amount. The number of "included" units may be associated with a time period. For example, the time period may be fixed, or may be a "rolling window" that includes the current billing period. A "rolling window" may be specified in terms of a number of billing periods that precedes and includes the current billing period. A charge event corresponding to the base charge object may be generated. The charge specification may also include an overage charge object-in the event the subscription customer's usage exceeds the number of "included" units (i.e., those the customer is entitled to under terms of a subscription agreement or contract) with respect to a particular time period, the billing engine may generate additional charge events based on the overage charge objects, that is those based on the amount the usage exceeds the number of "included" units. For example, the overage charge object may define a specified cost per unit of usage that exceeds the number of "included" units. There may be several pricing "tiers" (not shown) associated with various "included" unit amounts that are taken into account before overage charge events are generated. Similarly, there may be one or more overage charge object definitions that can be used to determine the overage charges based on different tiers, amounts, or levels of overage usage.

The "rolling window" described above is a type of commit charge model smoothing. Commit charge models in accordance with at least one embodiment of the invention may include any suitable type of overage smoothing. For example, as well as a "rolling window" and the utilization of other types of accounting windows (e.g., fixed windows of time and windows defined with respect to classes of time such as mornings, weekends and holidays), overage may be smoothed with respect to measured resource utilization trends or averages or other suitable statistical properties. Measured resource utilization may be filtered, for example to ignore utilization "spikes," allowing a customer to avoid overage charges if their usage spikes in any one period.

Referring again to Figure 4, the subscription may provide for 500 units per month but calculates overage charges based on a 3 month rolling window. If the customer's aggregate monthly usage is: 700 units in January, 200 units in February, 800 units in March, 100 units in April, 700 units in May, and 300 units in June, then the customer will have exceeded its monthly allotment by 200 units in January, 300 units in March, and 200 units in May. However, overage charges will be calculated based on the aggregate usage over the two 3 month windows, January-March and April-June. In the Jan-March window, overage charge events will be generated based on the customer exceeding its three month aggregate usage allotment of 1500 units by a total of 200. In the April-June window, the customer used only 1,100 units, 400 less than its allotment and no overage charge events will be generated. Charge events associated with overage may be generated as soon as the overage is detected (e.g., detected by the billing service), or at a later time, for example, at the end of a billing period or a smoothing period. At times, some portion of the "included" units may be unused (e.g., as determined based on measured resource utilization). Such unused resource units may be credited to a next smoothing period (e.g., effectively increasing the "included" units available) or may be cancelled. A "next" smoothing period for a "rolling window" may correspond to a movement of the window to include a next billing period. For example, the movement may be quantized with respect to types of time period such as a day, a week or a month.

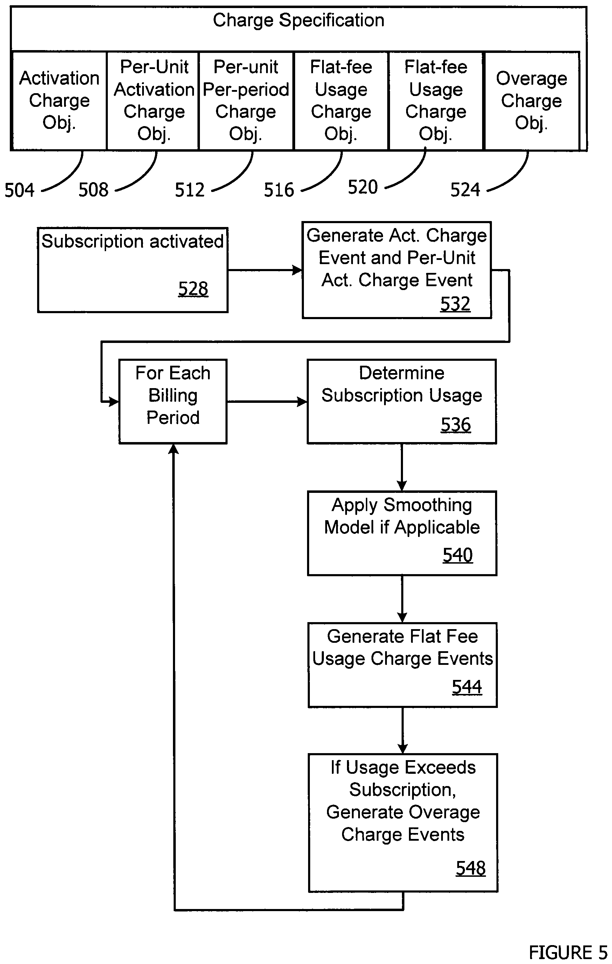

Figure 5 depicts examples of charge objects that may be specified in a subscription model in accordance with a commit charge model. An activation charge object 504 may result in the generation of a charge event corresponding to a flat activation fee at the outset of the subscription. A per-unit activation charge object 508 may result in the generation of charge events for each license activated under the subscription. A per-unit-per-period charge object 512 may result in the generation of periodic charge events for each license activated under the subscription, and may be variable depending on the number of licenses activated. A flat-fee usage charge object 516 may result in the generation of periodic charge events corresponding to usage of a particular feature of the product and/or service, and may be dependent on the amount of usage during the billing period. An incremental service charge object 520 may result in the generation of periodic charge events corresponding to a committed amount of usage of a product and/or service during the billing period. Finally, an overage charge object may result in the generation of overage charge events corresponding to an amount of usage of a product and/or service that exceeds the committed amount specified by the incremental service charge object 520.

Still referring to Figure 5, the present SBMS may generate charge events based on the preceding example charge specification. Upon activation 528, the activation charge object 504 may generate a one-time activation charge event of $10,000, which may be waived upon purchase of more than 100 licenses and the per-unit activation charge object 508 may generate a one-time charge event of $100 per activated license 532, which may be waived upon purchase of more than 100 licenses. For each billing period, the billing engine will determine an amount of product and/or service usage during the period 536 and optionally apply any applicable smoothing techniques 540. The billing engine will then generate monthly charge events 544, based on the per-unit-per-period charge object 512 and flat-fee usage charge objects 516, 520. For example, the per-unit-per-period charge object 512 may generate charge events of $60 per license per month, and which may be increased to $65 per license per month for subscriptions with less than 10 licenses. The flat-fee usage charge object 516 may generate monthly charge events for usage of an email tool, where the charge event is $2000 in any month in which the tool processes less than 1 million emails and $3000 per month otherwise. Another type of flat-fee usage charge object 520 may generate monthly charge events based on a $.07 per minute charge per the number of units of a service, e.g. minutes of access, used during the billing period, and which may be dependent on the aggregated total usage in the billing period, charging $.10 per minute if the service is used less than 50 minutes in a specified time period, otherwise $0.07/minute. If the usage during the period exceeds a subscription maximum, the billing engine may also generate 546 overage charge events in accordance with the overage charge object 525. The units of measurement may be any suitable measured utilization of resources including purchases, data processed and service utilization time.

Exemplary embodiments of the present SBMS may also permit the billing engine to generate charge events base on a charge specification in accordance with a discount charge model. A discount charge model may be a percentage discount with respect to an aggregate amount associated with charge segments in a current billing period. Further examples of discount charge models include a fixed amount discount. Discounts may be one-time or recurring and may apply to charge segments associated with one-time, recurring or usage-based charges. Discounts may be applied with respect to a current billing period (e.g., on a specified day of each billing period), or with respect to any suitable condition or trigger event (e.g., contract acceptance, service activation). Discounts may apply for a specified number of billing periods (e.g., first 6 months of a 12 month subscription) and be limited by a specified account lifetime maximum (e.g., a maximum dollar amount). Discounts may be determined based on charge events associated with particular charges, specified charge types, products, rate plans, subscriptions and/or accounts, including opt-in and opt-out specifications. Multiple discounts may apply to particular charge events.

Further examples of charges in accordance with an exemplary discount charge model include: apply up to $100 discount per month to all the charges of rate plan X, apply 20% discount for every charge of subscription A in the account, and apply up to $1000 discount per month to all the charges on the account. Discounts may be treated as a type of charge and may generate discount charge events including pro-rated charge events as appropriate. The billing engine may generate discount charge events after non-discount charge events and before determining taxes associated with charge event amounts. Non-discount ("regular") charge events may be considered in a sorted order (e.g., sorted with respect to unique identifier and/or charge event creation time) when determining discount charge events. In accordance with at least one embodiment of the invention, such ordered consideration enables discount application tracking and "reversal" when appropriate (e.g., responsive to subscription amendment and/or cancellation).

Discount charges, while being processed by the billing engine, may maintain an open period and a discount balance. Charge events generated in the open period may take advantage of the discount before its balance runs out. Subscription cancellation may reverse the discount applied and return the amount to the discount balance. Left-over balance of a discount may be "rolled over" when the current billing period closes, or not, as specified, or as determined by criteria set by a customer or vendor. Discount charge events may be inhibited if there are no corresponding regular charges and/or if such charge events would result in an account balance and/or a statement balance less than zero.

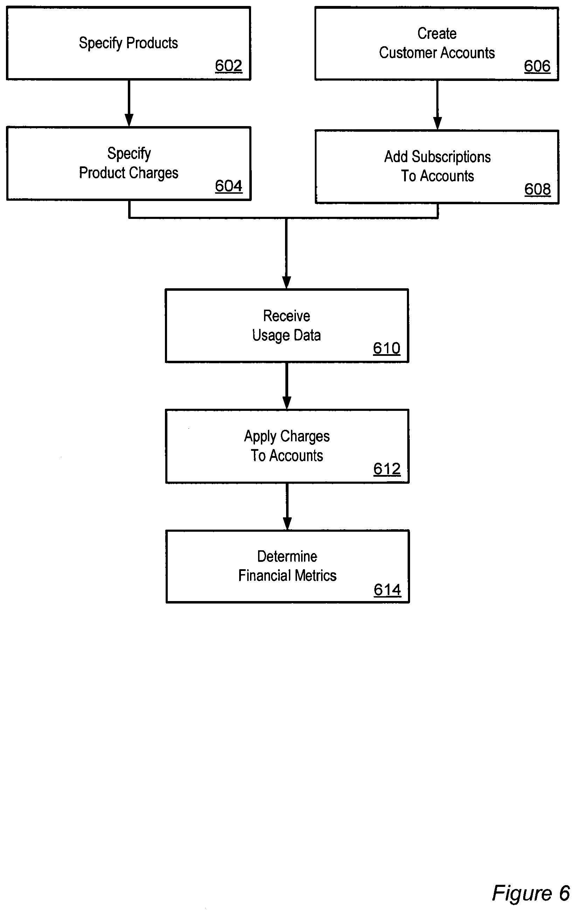

Figure 6 depicts example steps in accordance with at least one embodiment of the invention. At step 602, products may be specified, for example, with a graphical user interface of the billing service. At step 604, product charges may be specified, for example, as part of product specification. At step 606, customer accounts may be created, for example, accounts for customers interested in using the products specified at step 602. At step 608, subscriptions may be associated with customer accounts, for example, when an authorized user of a customer account executes a service contract associated with a subscription. At step 610, resource utilization data may be received. For example, the billing service may receive utilization data for resources associated with subscriptions (e.g., associated with a subscription identifier) from a vendor of a product referenced by the subscriptions. At step 612, charges may be applied to accounts in accordance with the subscriptions, for example, the billing engine may generate charge events as described above. At step 614, one or more financial metrics may be determined based on the generated charge events.

A subscription-based data model in accordance with at least one embodiment of the invention may enable efficient and effective presentation of incurred charges in accordance with customer expectations. As described, such a data model includes a variety of charge objects for representing a variety of types of charges, such as standard usage charges, overage charges and/or discounts. Such charge objects are advantageously not time-based, allowing charge objects to be fungible between specific subscription instances. Instead, the data-model applies time-based variables to relatively generic charge objects to create charge segments specific to the particular subscription. In accordance with at least one embodiment of the invention, such a data model further facilitates efficient and effective determination of financial metrics such as monthly recurring revenue (MRR), total contract value (TCV), total invoice amount and annual contract value. For example, such metrics may be determined based on charge segments, and rolled up through to the charge, subscription and/or amendment, and account levels. Reliable determination of such metrics is not insignificant, since product vendor business decisions can depend on resultant values.

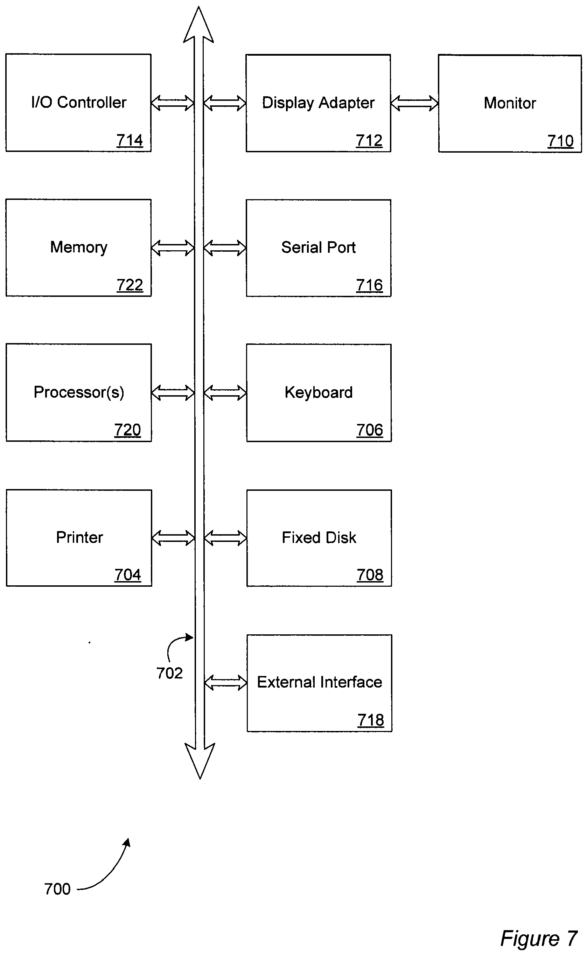

By way of a non-limiting example, Figure 7 depicts aspects of elements that may be present in an exemplary computer architecture 700 which may be configured to implement at least some embodiments of the present methods and/or processes and/or systems. The architecture 700 includes subsystems interconnected via a system bus 702. The subsystems may include a printer 704, a keyboard 706, a fixed disk 708, and a monitor 710, which is coupled to a display adapter 712. Peripherals and input/output (I/O) devices, which couple to an I/O controller 714, can be connected to the computer system by any number of means known in the art, such as a serial port 716. For example, the serial port 716 or an external interface 718 can be utilized to connect the computer device 700 to further devices and/or systems not shown in Figure 7 including a wide area network such as the Internet, a mouse input device, and/or a scanner. The interconnection via the system bus 702 allows one or more processors 720 to communicate with each subsystem and to control the execution of instructions that may be stored in a system memory 722 and/or the fixed disk 708, as well as the exchange of information between subsystems. The system memory 722 and/or the fixed disk 708 may embody a tangible computer-readable medium.

It should be understood that the present invention as described above can be implemented in the form of control logic using computer software in a modular or integrated manner. Based on the disclosure and teachings provided herein, a person of ordinary skill in the art will know and appreciate other ways and/or methods to implement the present invention using hardware and a combination of hardware and software.

Any of the software components, processes or functions described in this application may be implemented as software code to be executed by a processor using any suitable computer language such as, for example, Java, C++, or Perl, using, for example, conventional or object-oriented techniques. The software code may be stored as a series of instructions, or commands on a computer readable medium, such as a random access memory (RAM) a read-only memory (ROM), a magnetic medium such as a hard-drive, a solid-state device such as a flash memory drive, or an optical medium such as a CD-ROM. Any such computer readable medium may reside on or within a single computational apparatus, and may be present on or within different computational apparatuses within a system or network.

Exemplary embodiments of the present SBMS have been described in detail above and in the accompanying figures for illustrative purposes. However, the scope of the present SBMS is defined by the claims below and is not limited to the embodiments described above or depicted in the figures. Embodiments differing from those described and shown herein, but still within the scope of the defined SBMS are envisioned by the inventors and will be apparent to persons having ordinary skill in the relevant art in view of this specification as a whole. The inventors intend for the defined SBMS to be practiced other than as explicitly described herein. Accordingly, the defined SBMS encompasses all modifications and equivalents of the subject matter as permitted by applicable law.

The following paragraphs provide a list of additional embodiments which may serve as basis for Embodiments in this application or in any subsequently filed divisional application(s).

Embodiment 1. A method of billing charges incurred by a customer having a subscription account maintained by subscription billing management system, wherein the subscription account specifies at least one subscription to be charged according to a defined rate plan, said rate plan including at least one charge object having attributes including a trigger condition, a unit of measurement, and a cost per unit of
measurement, the method comprising:
(a) defining at least one charge segment associated with at least one of charge object, said charge segment being a trigger-event based application of said charge object and having attributes including said associated charge object's attributes, a quantity of units of measurement, and a cost,
(b) monitoring the customer's use of said subscription according to said unit of measurement,
(c) generating charge events in accordance with said at least one charge object, said at least one defined charge segment, each charge event representing a cost of an aspect of said subscription account; and
(d) periodically aggregating said charge events into a single aggregate cost notifying said customer of the current single aggregate cost.

Embodiment 2. The method of Embodiment 1 , wherein said at least one charge object represents a one-time subscription charge.

Embodiment 3. The method of Embodiment 1 , wherein said at least one charge object represents a recurring subscription charge.

Embodiment 4. The method of Embodiment 1 , wherein said at least one charge object represents a usage charge, based on said customer's consumption of a subscription resource.

Embodiment 5. The method of Embodiment 1 , wherein said at least one charge object represents a overage charge, based on said customer's consumption of a subscription resource exceeding a defined maximum during a defined period.

Embodiment 6. The method of Embodiment 1 , wherein said at least one charge object represents a discount charge.

Embodiment 7. The method of Embodiment 1 , wherein said subscription charges are based on the consumption of a defined amount of subscription resources in a defined period, said at least one charge object includes a base charge object and an overage charge object, and further comprising the steps of:
(e) defining a rolling window of time that includes at least one billing period; and
(f) defining a base number of said units of measurements allocated to said rolling window and associated with said base charge object having a base cost;
and step (c) includes:
(g) generating a charge event corresponding to said base charge object; and
(h) if said customer consumers more units of measurement during the current rolling window than said defined base number of units of measurement and, generating a charge event corresponding to said overage charge object.

Embodiment 8. The method of Embodiment 1 , wherein said subscription account includes negative, discount charge objects and the method further comprises:
(i) determining an open period associated with said discount charge object; and
(j) determining a discount balance associated with said discount charge object;
wherein said discount balance is applied to at least one charge event generated during said open period.

Embodiment 9. The method of Embodiment 8, wherein after said discount balance is applied to at least one charge event of a current period, a remaining discount balance is available to be applied to at least one charge event generated in a subsequent period.

Embodiment 10. A method of determining an amount to bill a customer having a subscription account maintained by subscription billing management system, wherein the subscription account specifies at least one subscription wherein said customer is charged according to a rate plan in exchange for receiving a benefit, said rate plan being defined by said benefit, a billing period, at least one charge object having attributes including at least a trigger condition, a unit of measurement of said benefit, and a cost per unit of measurement, and an allocation of units of measurement to said customer during a first period of time, the method comprising, over the course of a billing period:
(a) monitoring the customer's use of said benefit according to said unit of measurement relative to said allocation of said units of measurement;
(b) dividing said billing period into a plurality of temporal segments and defining a charge segment for each temporal segment, each charge segment being associated with one of said at least one charge object and having attributes including the attributes of said associated charge object, a quantity of units, and a cost, each charge segment being a representation of the potential charge for said customer's use of said benefit during the respective temporal segment;
(c) for each charge segment, generating a charge event in accordance with each charge segment, each charge event representing an incremental charge to the customer for the use of the benefit during the respective temporal segment, said incremental charge being dependent on the attributes of the respective charge segment; and
(d) aggregating said plurality of charge events into a single aggregate cost for the billing period and notifying said customer of the single aggregate cost.

Embodiment 11. The method of Embodiment 10, wherein said subscription charges are based on the number of units of measurement used by said customer during a defined period, said at least one charge object includes a base charge object and an overage charge object, and step (b) comprises:
(i) for each temporal segment, determining whether the aggregate number of units of measurement used by said customer since the beginning of the current defined period is less than or equal to said allocation of units of measurement,
(ii) if the aggregate number of units of measurement used by said customer since the beginning of the current defined period is less than or equal to said allocation of units of measurement, defining charge segments associated with said base charge object, and
(iii) if the number of units of measurement used by said customer since the beginning of the current defined period is greater than said allocation of units of measurement, defining charge segments associated with said overage charge object.

Embodiment 12. The method of Embodiment 11 , wherein said defined period equals said billing period.

Embodiment 13. The method of Embodiment 11 , wherein said defined period equals a plurality of billing periods.

Embodiment 14. The method of Embodiment 10, wherein said subscription account includes discount charge objects, having attributes including at least a discount type, a trigger condition, a unit of measurement of said discount, and representing a reduction in the amount to be charged to said customer, and the method further comprises:
(i) for each temporal segment of step (b) determining if said trigger condition has been met;
(j) if said trigger condition has been met, generating a discount charge segment, said discount charge segment being associated with said discount charge object and having attributes including the attributes of said associated discount charge object, each discount charge segment being a representation of the potential reduction in charge for said customer's use of said benefit during the respective temporal segment, and
(k) for each discount charge segment, generating a discount charge event in accordance with each discount charge segment, each discount charge event representing an incremental discount to the customer for the use of the benefit during the respective temporal segment, said incremental discount being dependent on the attributes of the respective discount charge segment; and
   step (d) further comprises aggregating any discount charge events into a single aggregate discount for the billing period and subtracting said single aggregate discount from said single aggregate cost for the billing period events into a total aggregate cost for the billing period and notifying said customer of the total aggregate cost.

Embodiment 15. A computer implemented system of subscription billing management comprising at least one computing device configured to:
(a) maintain a plurality of subscription based product models, each subscription based product model including at least one rate plan model, and each rate plan model including at least one charge object having attributes including at least a trigger condition, a unit of measurement of said product, and a cost per unit of measurement;
(b) maintain a subscription account for a customer, said subscription account specifying at least one product being provided to said customer in units of measurement on an ongoing basis and further specifying an associated rate plan for defining how said customer is to be periodically billed for said use of units of measurement of said product, and a number of units of measurement allocated for use by said customer per billing period,
(c) monitor said customer's use of units of measurement of said product over a billing period relative to said allocation of said units of measurement;
(d) divide said billing period into a plurality of temporal segments and defining a charge segment for each temporal segment, each charge segment being associated with at least one of said specified rate plan's said at least one charge object and having attributes;
(e) for each charge segment, generate a charge event in accordance with each charge segment, each charge event representing an incremental charge to the customer for the use of the benefit during the respective temporal segment, said incremental charge being dependent on the attributes of the respective charge segment;
(f) aggregate said plurality of charge events into a single aggregate cost for the billing period; and
(g) notify said customer of the single aggregate cost.

Embodiment 16. The system of Embodiment 15, wherein said specified rate plan's definition of how said customer will be periodically billed is at least partially dependent on the number of units of measurement used by said customer during a defined period and also dependent on the number of units of measurement allocated for use by said customer per billing period and said specified rate plan includes a base charge object and an overage charge object, and the system further comprises at least one computer configured to:
(h) determine whether the aggregate number of units of measurement used by said customer since the beginning of the current defined period is less than or equal to said allocation of units of measurement,
(i) if the aggregate number of units of measurement used by said customer since the beginning of the current defined period is less than or equal to said allocation of units of measurement, define charge segments associated with said base charge object, and
(j) if the aggregate number of units of measurement used by said customer since the beginning of the current defined period is greater than said allocation of units of measurement, define charge segments associated with said overage charge object,

Embodiment 17. The method of Embodiment 16, wherein said defined period equals said billing period.

Embodiment 18. The method of Embodiment 16, wherein said defined period equals a plurality of billing periods.

Embodiment 19. The system of Embodiment 15, wherein said specified rate plan also includes discount charge objects having attributes including at least a discount type, a trigger condition, a unit of measurement of said discount, and representing a reduction in the amount to be charged to said customer, and the system further comprises at least one computing device configured to:
(h) for each temporal segment of element (d), determine if said trigger condition has been met;
(i) if said trigger condition has been met, generate a discount charge segment, said discount charge segment being associated with said discount charge object and having attributes including the attributes of said associated discount charge object, each discount charge segment being a representation of the potential reduction in charge for said customer's use of said product during the respective temporal segment, and
(j) for each discount charge segment, generate a discount charge event in accordance with each discount charge segment, each discount charge event representing an incremental discount to the customer for the use of the product during the respective temporal segment, said incremental discount being dependent on the attributes of the respective discount charge segment; and
(k) aggregating any discount charge events into a single aggregate discount for the billing period and subtracting said single aggregate discount from said single aggregate cost for the billing period events into a total aggregate cost for the billing period.

Embodiment 20. A computer implemented system of subscription billing management comprising at least one computing device configured to determine charges incurred by a customer having a subscription account maintained by said subscription billing management system, wherein the subscription account specifies at least one subscription to be charged according to a defined rate plan, said rate plan including at least one charge object having attributes, said charge object attributes including a charge type, a trigger condition, a unit of measurement, and a cost per unit of measurement, and the system determines said charges by: (a) defining at least one charge segment associated with at least one of charge object, said charge segment being an time-based application of said charge object and having attributes including an associated charge object and charge object attributes, an effective start time, a quantity of units, and a cost,
(b) monitoring the customer's use of said subscription according to said unit of measurement,
(c) generating charge events in accordance with said at least one charge object, said at least one defined charge segment, each charge event representing a cost of an aspect of said subscription account; and
(d) periodically aggregating said charge events into a single aggregate cost notifying said customer of the current single aggregate cost.

## Claims

1. A method of processing charges in a configurable billing management system for a plurality of subscription accounts associated with a plurality of platform tenants (104) of a multi-tenant platform, the method comprising:
providing, by an online multi-tenant server system (108) over a communication network (112), to each of a plurality of merchant users of the plurality of platform tenants (104) a respective first interface (244; 260) for presentation by a respective client application (224) of a respective remote computing device (204), the respective first interface (244; 260) for selecting one or more charge objects (312) from a plurality of charge objects (312) for each of the plurality of subscription accounts (316), each of the charge objects (312) being capable of selection and configuration by each merchant user of the plurality of platform tenants (104), a particular respective first interface (244; 260) for presentation by a particular respective client application (224) of a particular respective remote computing device (204) enabling a particular merchant user of a particular platform tenant (104) of the plurality of platform tenants (104) to select one or more particular charge objects (312) from the plurality of charge objects (312) for a particular subscription account (320) of the plurality of subscription accounts (320) associated with the particular platform tenant(104), wherein each charge object (312) of the plurality of charge objects (312) has a plurality of attributes including a type, a trigger condition, a unit of measurement, and a cost per unit of measurement and is distinct from time intervals, the type being one of a one-time charge type, a recurring charge type, a usage charge type, an overage charge type, and a discount charge type, the online multi-tenant server system (108) configured according to a stack model representing:
one or more processors (720) and memory (722) within a hardware layer;
an operating system stored in the memory (722) and executing on the one or more processors (720), the operating system being within an operating system layer; providing, by the online multi-tenant server system (108) over the communication network, a second interface (244; 260) to establish one or more subscription choices for the particular subscription account associated with the particular platform tenant (104), the one or more subscription choices specifying at least one particular attribute of the plurality of attributes of a particular charge object (312) of the one or more charge objects (312);
generating, by the online multi-tenant server system (108), one or more charge segments (340) for the particular subscription account (316) using the specified at least one particular attribute of the plurality of attributes of the particular charge object (312) and using the particular charge object (312), the one or more charge segments (340) specifying the type, the trigger condition, the unit of measurement, the cost per unit of measurement, and a particular time interval;
obtaining, at the online multi-tenant server system (108), tenant activity associated with the particular platform tenant (104) to detect an occurrence of one or more trigger conditions of the one or more charge segments;
for each occurrence of each trigger condition of the one or more trigger conditions of each respective charge segment (340) of the one or more charge segments (340), automatically generating a charge event based on the plurality of attributes of the respective charge segment (340), the charge event including a discount charge event if the respective charge segment includes a discount charge type; and
aggregating, by the online multi-tenant server system (108), the charge events to produce an account statement.

2. A method of claim 1, wherein generating the charge event based on the plurality of attributes of the respective charge segment (340) includes generating the charge event based on the type attribute of the respective charge segment (340).

3. A method of claim 1, wherein:
one of the particular respective first interface (244; 260) or the second interface (244; 260) further provides for defining a rolling window of time having a base number of units of measurement comprising the rolling window of time;
obtaining the tenant activity associated with the particular platform tenant (104) to detect the occurrence of the one or more trigger conditions further comprises obtaining the tenant activity during the rolling window of time; and
automatically generating the charge event based on the plurality of attributes of the respective charge segment (340) further comprises generating a charge event for the rolling window of time.

4. A method of claim 3, wherein:
at least one of the one or more charge objects (312) comprises an overage charge type of charge object (312) having an overage type of trigger condition;
obtaining the tenant activity associated with the particular platform tenant (104) to detect the occurrence of the one or more trigger conditions further comprises obtaining the tenant activity to detect an occurrence of the overage type of trigger condition-during the rolling window of time; and
generating the charge event further comprises generating an overage charge event based on the overage charge type of charge object (312).

5. A method of claim 1, wherein:
the second interface (244; 260) further provides for defining a fixed window of time having a base number of units of measurement comprising the fixed window of time;
obtaining the tenant activity associated with the particular platform tenant (104) to detect the occurrence of the one or more trigger conditions further comprises obtaining the tenant activity during the fixed window of time; and
automatically generating the charge event based on the plurality of attributes of the respective charge segment (340) further comprises generating a charge event for the fixed window of time.

6. A method of claim 1, wherein:
at least one of the one or more charge objects (312) comprises a discount charge type of charge object that includes a defined open time period;
obtaining the tenant activity associated with the particular platform tenant (104) to detect the occurrence of the one or more trigger conditions further comprises obtaining the tenant activity to detect an occurrence of the trigger condition of the discount charge type of charge object (312) during the open time period; and
generating the charge event further comprises generating a discount charge event based on the discount charge type of charge object.

7. A configurable billing management system for a plurality of subscription accounts associated with a plurality of platform tenants (104) of a multi-tenant platform, the system comprising one or more servers, each server including at least one processor (720), and instructions stored in memory (722) configured to, when executed, cause the servers to operate to:
provide, by an online multi-tenant server system (108) over a communication network (112), to each of a plurality of merchant users of the plurality of platform tenants (104) a respective first interface (244; 260) for presentation by a respective client application (224) of a respective remote computing device (204), the respective first interface (244; 260) for selecting one or more charge objects (312) from a plurality of charge objects (312) for each of the plurality of subscription accounts, each of the charge objects (312) being capable of selection and configuration by each merchant user of the plurality of platform tenants (104), a particular respective first interface (244; 260) for presentation by a particular respective client application (224) of a particular respective remote computing device (204) enabling a particular merchant user of a particular platform tenant (104) of the plurality of platform tenants (104) to select one or more particular charge objects (312) from the plurality of charge objects (312) for a particular subscription account (320) of the plurality of subscription accounts (320) associated with the particular platform tenant (104), wherein each charge object (312) of the plurality of charge objects (312) has a plurality of attributes including a type, a trigger condition, a unit of measurement, and a cost per unit of measurement and is distinct from time intervals, the type being one of a one-time charge type, a recurring charge type, a usage charge type, an overage charge type, and a discount charge type, the online multi-tenant server system (108) configured according to a stack model representing:
one or more processors (720) and memory (722) within a hardware layer;
an operating system stored in the memory (722) and executing on the one or more processors (720), the operating system being within an operating system layer;
provide, by the online multi-tenant server system (108) over the communication network (112), a second interface (244; 260) to establish one or more subscription choices for the particular subscription account associated with the particular platform tenant (104), the one or more subscription choices specifying at least one particular attribute of the plurality of attributes of a particular charge object (312) of the one or more charge objects (312);
generate, by the online multi-tenant server system (108), one or more charge segments (340) for the particular subscription account (316) using the specified at least one particular attribute of the plurality of attributes of the particular charge object (312) and using the particular charge object (312), the one or more charge segments (340) specifying the type, the trigger condition, the unit of measurement, the cost per unit of measurement, and a particular time interval;
provide a billing engine (256), wherein the billing engine (256) operates to:
obtain, at the online multi-tenant server system (108), tenant activity associated with the particular platform tenant (104) to detect an occurrence of one or more trigger conditions of the one or more charge segments (340);
for each occurrence of each trigger condition of the one or more trigger conditions of each respective charge segment (340) of the one or more charge segments (340), automatically generate a charge event based on the plurality of attributes of the respective charge segment (340), the charge event including a discount charge event if the respective charge segment includes a discount charge type; and
aggregate, by the online multi-tenant server system (108), the charge events to produce an account statement.

8. A system of claim 7, wherein the instructions configured to generate the charge event based on the plurality of attributes of the respective charge segment (340) include instructions configured to generate the charge event based on the type attribute of the respective charge segment (340).

9. A system of claim 7, wherein:
the instructions configured to provide one of the particular respective first interface (244; 260) or the second interface (244; 260) include instructions that are configured to provide for defining a rolling window of time having a base number of units of measurement comprising the rolling window of time; and
the instructions configured to operate to provide the billing engine (256) to:
obtain the tenant activity associated with the particular platform tenant (104) to detect the occurrence of the one or more trigger conditions are configured to obtain the tenant activity during the rolling window of time; and
automatically generate the charge event based on the plurality of attributes of the respective charge segment (340) are configured to generate a charge event for the rolling window of time.

10. A system of claim 9, wherein:
at least one of the one or more charge objects (312) comprises an overage charge type of charge object (312) having an overage type of trigger condition; and
the instructions configured to cause the billing engine (256) to:
obtain the tenant activity associated with the particular platform tenant (104) to detect the occurrence of the one or more trigger conditions are configured to obtain the tenant activity to detect the occurrence of the overage type of trigger condition during the rolling window of time; and
generate the charge event are configured to generate an overage charge event based on the overage charge type of charge object (312) .

11. A system of claim 7, wherein:
the instructions configured to provide the second interface (244; 260) further include instructions configured to provide for defining a fixed window of time having a base number of units of measurement comprising the fixed window of time; and
the instructions configured to cause the billing engine (256) to:
obtain the tenant activity associated with the particular platform tenant (104) to detect the occurrence of the one or more trigger conditions include instructions configured to obtain the tenant activity during the fixed window of time; and
automatically generate the charge event based on the plurality of attributes of the respective charge segment (340) include instructions configured to generate a charge event for the fixed window of time.

12. A system of claim 7, wherein:
at least one of the one or more charge objects (312) comprises a discount charge type of charge object that includes a defined open time period; and
the instructions configured to cause the billing engine (256) to:
obtain the tenant activity associated with the particular platform tenant (104) to detect the occurrence of the one or more trigger conditions includes instructions configured to obtain the tenant activity to detect an occurrence of the trigger condition of the discount charge type of charge object (312) during the open time period; and
generate the charge event include instructions configured to generate a discount charge event based on the discount charge type of charge object (312).

13. A persistent computer readable medium storing computer code configured to, when executed, cause one or more processing devices to operate to:
provide, by an online multi-tenant server system (108) over a communication network (112), to each of a plurality of merchant users of the plurality of platform tenants (104) a respective first interface (244; 260) for presentation by a respective client application (224) of a respective remote computing device (204), the respective first interface (244; 260) for selecting one or more charge objects (312) from a plurality of charge objects (312) for each of the plurality of subscription accounts (316), each of the charge objects (312) being capable of selection and configuration by each merchant user of the plurality of platform tenants (104), a particular respective first interface (244; 260) for presentation by a particular respective client application (224) of a particular respective remote computing device (204) enabling a particular merchant user of a particular platform tenant (104) of the plurality of platform tenants (104) to select one or more particular charge objects (312) from the plurality of charge objects (312) for a particular subscription account (320) of the plurality of subscription accounts (320) associated with the particular platform tenant (104), wherein each charge object (312) of the plurality of charge objects (312) has a plurality of attributes including a type, a trigger condition, a unit of measurement, and a cost per unit of measurement and is distinct from time intervals, the type being one of a one-time charge type, a recurring charge type, a usage charge type, an overage charge type, and a discount charge type, the online multi-tenant server system (108) configured according to a stack model representing:
one or more processors (720) and memory (722) within a hardware layer;
an operating system stored in the memory (722) and executing on the one or more processors (720), the operating system being within an operating system layer;
provide, by the online multi-tenant server system (108) over the communication network (112), a second interface (244; 260) to establish one or more subscription choices for the particular subscription account associated with the particular platform tenant (104), the one or more subscription choices specifying at least one particular attribute of the plurality of attributes of a particular charge object (312) of the one or more charge objects (312);
generate, by the online multi-tenant server system (108), one or more charge segments (340) for the particular subscription account (316) using the specified at least one particular attribute of the plurality of attributes of the particular charge object (312) and using the particular charge object (312), the one or more charge segments (340) specifying the type, the trigger condition, the unit of measurement, the cost per unit of measurement, and a particular time interval;
provide a billing engine, wherein the billing engine (256) operates to:
obtain, at the online multi-tenant server system (108), tenant activity associated with the particular platform tenant (104) to detect an occurrence of one or more trigger conditions of the one or more charge segments (340);
for each occurrence of each trigger condition of the one or more trigger conditions of each respective charge segment (340) of the one or more charge segments (340), automatically generate a charge event based on the plurality of attributes of the respective charge segment (340), the charge event including a discount charge event if the respective charge segment includes a discount charge type; and
aggregate, by the online multi-tenant server system (108), the charge events to produce an account statement.

14. A computer readable medium of claim 13, wherein the computer code configured to generate the charge event based on the plurality of attributes of the respective charge segment (340) includes code configured to generate the charge event based on the type attribute of the respective charge segment (340).

15. A computer readable medium of claim 13, wherein the computer code is further configured such that:
the computer code configured to provide the respective first interface (244; 260) or the second interface (244; 260) includes code configured to provide for defining a rolling window of time having a base number of units of measurement comprising the rolling window of time; and
the computer code configured to cause the billing engine (256) to:
obtain the tenant activity associated with the platform tenant (104) to detect the occurrence of the one or more trigger conditions includes code configured to obtain the tenant activity during the rolling window of time; and
automatically generate the charge event based on the plurality of attributes of the respective charge segment includes code configured to generate a charge event for the rolling window of time.

16. A computer readable medium of claim 15, wherein the computer code is further configured such that:
at least one of the one or more charge objects (312) comprises an overage charge type of charge object (312) having an overage type of trigger condition; and
the computer code configured to cause the billing engine (256) to:
obtain the tenant activity associated with the particular platform tenant (104) to detect the occurrence of the one or more trigger conditions includes code configured to obtain the tenant activity to detect an occurrence of the overage type of trigger condition-during the rolling window of time; and
generate the charge event includes code configured to generate an overage charge event based on the overage charge type of charge object (312).

17. A computer readable medium of claim 13, wherein the computer code is further configured such that:
at least one of the specified one or more charge objects (312) comprises a discount charge type of charge object that includes a defined open time period; and
the computer code configured to cause the billing engine (256) to:
obtain the tenant activity associated with the particular platform tenant (104) to detect the occurrence of the one or more trigger conditions includes code configured to obtain the tenant activity to detect an occurrence of the trigger condition of the discount type of charge object (312) during the open time period; and
generate the charge event includes code configured to generate a discount charge event based on the discount charge type of charge object (312).
